# EUROPEAN PATENT APPLICATION

(11) **EP 4 040 617 A1**
(43) Date of publication of application: **10.08.2022**
(21) Application number: 19947731.6
(22) Date of filing: 04.10.2019
(51) Int. Cl.: H02G 3/30, F16B 2/06, F16B 2/12

(54) **CABLE CLAMP, PLASMA HEAD, AND CABLE CLAMPING METHOD**

(71) Applicant: Fuji Corporation, Chiryu-shi, Aichi 472-8686 (JP)
(72) Inventor: IWATA, Takuya, Chiryu-shi, Aichi 472-8686 (JP); JINDO, Takahiro, Chiryu-shi, Aichi 472-8686 (JP)
(74) Representative: Grünecker Patent- und Rechtsanwälte PartG mbB
(86) International application number: PCT/JP2019/039233
(87) International publication number: WO 2021/064976

(57) **Abstract**

A cable clamp comprising: a fixing section through which multiple cables are inserted; a recessed section where the multiple cables are exposed, the recessed section being provided in the fixing section; a first tapered surface configured to form the recessed section; a clamp section configured to be fastened to the fixing section in a state of being fitted into the recessed section; and a second tapered surface provided on the clamp section and configured to be pressed toward the first tapered surface in a state of being in contact with the multiple cables.

## Description

### Technical Field

The present disclosure relates to a cable clamp for fixing multiple cables.

### Background Art

Conventionally, various techniques have been proposed for the cable clamp.

For example, a cable fixing structure described in Patent Literature 1 includes a rubber bush which has a hollow cylindrical shape in which a first hole for inserting a cable is formed, and is constituted of a truncated cone-shaped portion having a tapered outer circumferential surface and a cylindrical portion continuous to the tapered shape, and has a stepped cut; a bracket attached to a panel, including a wall surface portion including an open end into which the rubber bush is inserted, a side surface portion which abuts on a circumferential surface of the cylindrical portion when the rubber bush is inserted from the cylindrical portion side, and a flat portion which supports a bottom portion of the cylindrical portion, and a tapered surface which is formed so as to expand in diameter toward the wall surface portion and the open end; and a nut provided with a second hole for inserting the cable and screwed with the bracket, in which the rubber bush is inserted into the bracket in a state where the cable is inserted through the first and second holes, and the bracket and the nut are screwed.

In a cable fixing structure having the above configuration, multiple cables having different thicknesses can be attached.

### Patent Literature

Patent Literature 1: JP-A-2017-167187

### Summary of the Invention

### Technical Problem

However, a clamp for fixing multiple cables has been desired to be downsized while securing at least the present fixing force since equipment target apparatuses and devices tend to be downsized.

The present disclosure has been made in view of the above-mentioned points, and an object thereof is to provide a cable clamp capable of both improving the fixing force for multiple cables and downsizing.

### Solution to Problem

The present specification discloses a cable clamp including: a fixing section through which multiple cables are inserted; a recessed section where the multiple cables are exposed, the recessed section being provided in the fixing section; a first tapered surface configured to form the recessed section; a clamp section configured to be fastened to the fixing section in a state of being fitted into the recessed section; and a second tapered surface provided on the clamp section and configured to be pressed toward the first tapered surface in a state of being in contact with the multiple cables.

### Advantageous Effect of the Invention

According to the present disclosure, a cable clamp is capable of both improving the fixing force for multiple cables and downsizing.

### Brief Description of Drawings

Fig. 1 is a perspective view showing a plasma treatment machine.
Fig. 2 is a perspective view showing a cable clamp.
Fig. 3 is an explanatory view showing a fixing section and a clamp section before fixing two internal cables using the cable clamp.
Fig. 4 is an explanatory view showing a fixing section and a clamp section after fixing two internal cables using the cable clamp.
Fig. 5 is a flowchart showing a cable clamping method.

### Description of Embodiments

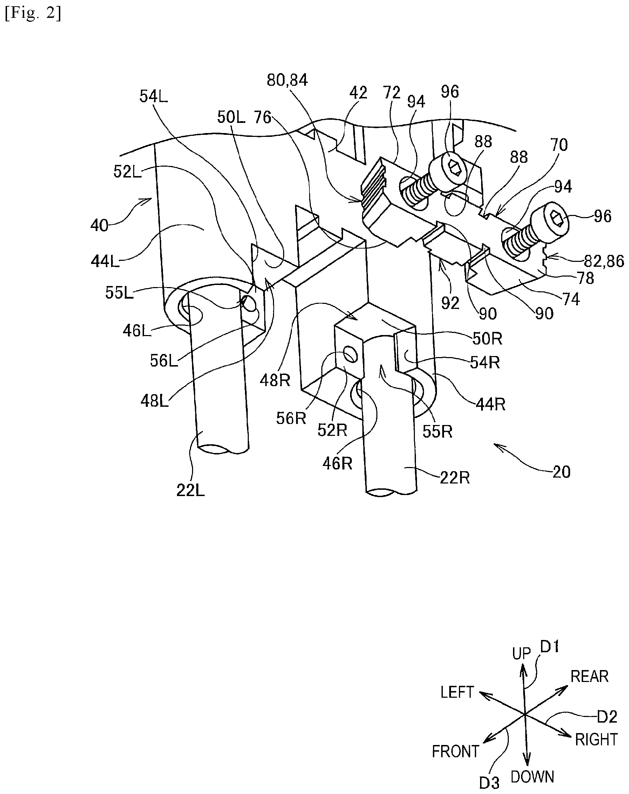

Hereinafter, preferred embodiments of the present disclosure will be described in detail with reference to the drawings. In the drawings used in the following descriptions, a part of the basic configurations may be omitted, and a dimensional ratio or the like of each section is not necessarily accurate. In FIGS. 2 to 4, up-down direction D1, left-right direction D2, and front-rear direction D3 used for explanation are as described in each drawing. First, a plasma treatment machine in which the cable clamp of the present embodiment is used will be described.

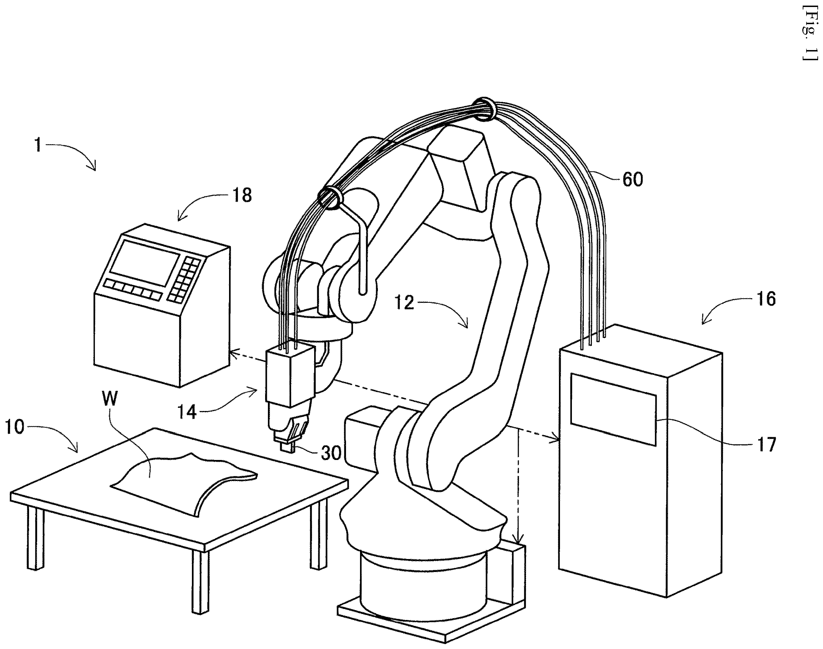

As shown in Fig. 1, plasma treatment machine 1 includes table 10 on which a workpiece W is mounted, serial link robot 12 (which may be referred to as a multidirectional robot, hereinafter, simply referred to as a robot) disposed beside table 10, and plasma head 14 held by robot 12 for irradiating a plasmatized gas. A lower part of plasma head 14 is formed as nozzle 30 for discharging the plasmatized gas. Further, plasma treatment machine 1 includes power source gas supply unit 16 that is a power source to plasma head 14 and is responsible for supplying gas to plasma head 14, and controller 18 (which includes a computer as main constituent element) as a control device for controlling plasma treatment machine 1. Multiple external cables 60 are connected between plasma head 14 and power source gas supply unit 16. Incidentally, robot 12 functions as a head moving device for moving plasma head 14 to irradiate workpiece W with the plasmatized gas.

Power source gas supply unit 16 includes touch panel 17 in addition to CPU, ROM, and RAM (not illustrated). On touch panel 17, various setting screens, operation states, and the like are displayed with respect to power source gas supply unit 16, and operation information is input by a user touching the screen.

A cable clamp is provided in plasma head 14. The cable clamp fixes multiple internal cables connected to multiple external cables 60 to plasma head 14. Hereinafter, the cable clamp will be described.

As shown in Fig. 2, cable clamp 20 fixes internal cables 22L and 22R. The English letters L and R appended to the signs indicate the left side and the right side. However, in a case where terms are collectively called without distinguishing left and right, the terms will be expressed without appending the English letters L and R to the signs. Cable clamp 20 includes fixing section 40 and clamp section 70.

Fixing section 40 includes main body 42. Protruding sections 44L and 44R protruding in a down direction are provided on both left and right ends of main body 42. Through holes 46L and 46R parallel to up-down direction D1 are formed in protruding sections 44L and 44R. Internal cables 22L and 22R are inserted through through holes 46L and 46R. Accordingly, internal cables 22L and 22R in fixing section 40 are in a state parallel to up-down direction D1.

Recessed sections 48L and 48R are formed in a direction extending from the inner side in which recessed sections 48L and 48R face each other to the rear side in protruding sections 44L and 44R. Recessed sections 48L and 48R are constituted of upper surfaces 50L and 50R, front surfaces 52L and 52R, and side surfaces 54L and 54R. Bolt holes 56L and 56R parallel to front-rear direction D3 are formed on front surfaces 52L and 52R.

Side surfaces 54L and 54R are tapered surfaces and inclined so as to be closer to each other as advancing to the front direction. The spaces between side surfaces 54L and 54R and front surfaces 52L and 52R are separated from each other, and are exposed sections 55L and 55R where internal cables 22L and 22R appear.

Clamp section 70 has a substantially rectangular parallelepiped shape and is constituted of upper surface 72, lower surface 74, front surface 76, rear surface 78, left surface 80, and right surface 82. Left surface 80 and Right surface 82 are tapered surfaces and inclined so as to be closer to each other as advancing to the front direction. Multiple groove sections 84 are formed on left surface 80. Multiple groove sections 84 are provided in parallel with each other at predetermined intervals in up-down direction D1. That is, multiple groove sections 84 are provided on left surface 80 along a direction orthogonal to up-down direction D1. Similarly, multiple groove sections 86 are formed on right surface 82. Multiple groove sections 86 are provided in parallel with each other at predetermined intervals in up-down direction D1. That is, multiple groove sections 86 are provided on right surface 82 along a direction orthogonal to up-down direction D1.

A pair of groove recessed sections 88 and 88 is formed on upper surface 72. The pair of groove recessed sections 88 and 88 is provided in parallel with each other along front-rear direction D3. As a result, upper surface 72 has a longer surface distance in left-right direction D2 than that on the flat surface. Similarly, a pair of groove recessed sections 90 and 90 is formed on lower surface 74. The pair of groove recessed sections 90 and 90 is provided in parallel with each other along front-rear direction D3. As a result, lower surface 74 has a longer surface distance in left-right direction D2 than that on the flat surface. In addition, uneven section 92 is provided on front surface 76. Uneven section 92 is uneven as advancing to the left side or the right side on front surface 76. As a result, front surface 76 has a longer surface distance in left-right direction D2 than that on the flat surface.

A pair of mounting holes 94 is provided so as to penetrate front surface 76. A pair of bolts 96 and 96 is inserted through the pair of mounting holes 94.

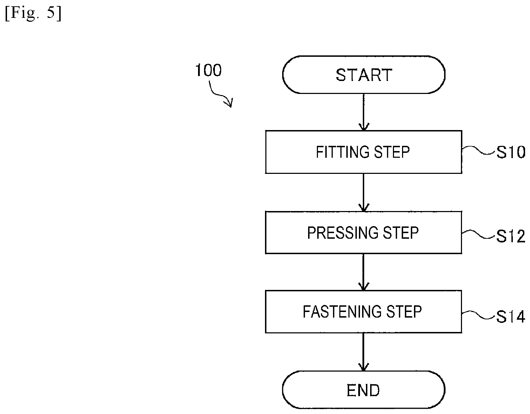

Next, a cable clamping method will be described. The cable clamping method is a method for fixing internal cables 22L and 22R using cable clamp 20. As shown in Fig. 5, in cable clamping method 100, fitting step S10, pressing step S12, and fastening step S14 are performed in this order.

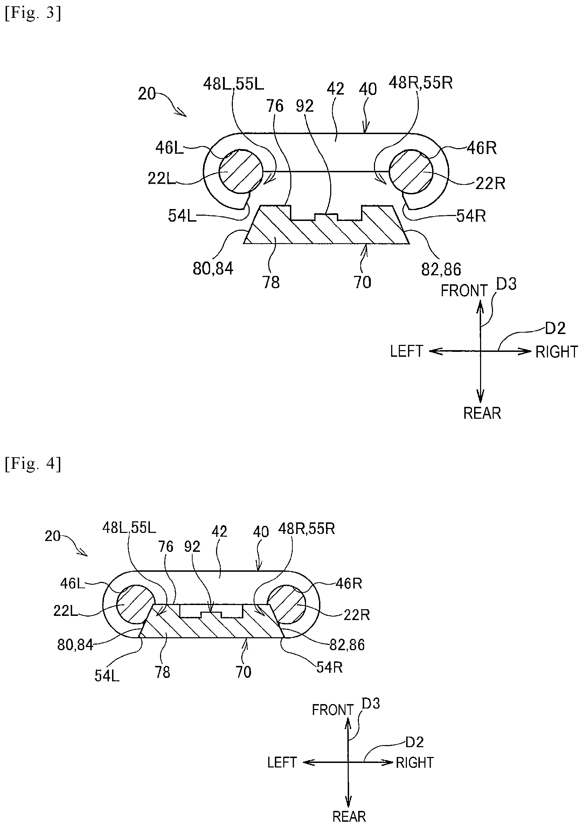

In fitting step S10, as shown in FIGS. 2 and 3, clamp section 70 in a state where front surface 76 thereof faces the front side is fitted into recessed sections 48L and 48R of fixing section 40 in which internal cables 22L and 22R are in a state of being inserted through through holes 46L and 46R.

In pressing step S12, as shown in Fig. 4, left surface 80 and right surface 82 of clamp section 70 are pressed toward side surfaces 54L and 54R of recessed sections 48L and 48R of fixing section 40. In this state, in exposed sections 55L and 55R of recessed sections 48L and 48R, internal cables 22L and 22R which appear in exposed sections 55L and 55R are brought into contact with each part of front surface 76, left surface 80, and right surface 82 of clamp section 70.

In fastening step S14, the pair of bolts 96 and 96 is screwed into bolt holes 56L and 56R of recessed sections 48L and 48R of fixing section 40 in a state of being inserted through the pair of mounting holes 94 of clamp section 70. As a result, left surface 80 and right surface 82 of clamp section 70 are in pressure contact with side surfaces 54L and 54R of recessed sections 48L and 48R of fixing section 40. In addition, in exposed sections 55L and 55R of recessed sections 48L and 48R, each part of front surface 76, left surface 80, and right surface 82 of clamp section 70 is in pressure contact with internal cables 22L and 22R. At this time, in addition to front surface 76, left surface 80, and right surface 82 of clamp section 70, upper surface 72 and lower surface 74 are adjacent to and in contact with internal cables 22L and 22R. In this manner, in cable clamp 20, clamp section 70 is fastened to fixing section 40 by the fastening force of the pair of bolts 96, 96, whereby the internal cables 22L, 22R are fixed.

Left surface 80 and right surface 82 of clamp section 70 are tapered surfaces inclined so as to be closer to each other as advancing to the front direction in which the pair of bolts 96 and 96 is screwed. Similarly, side surfaces 54L and 54R of recessed sections 48L and 48R of fixing section 40 are tapered surfaces inclined so as to be closer to each other as advancing to the front direction in which the pair of bolts 96 and 96 is screwed. As a result, when left surface 80 and right surface 82 of clamp section 70 are in pressure contact with side surfaces 54L and 54R of recessed sections 48L and 48R of fixing section 40, a wedge effect is generated against the fastening force of the pair of bolts 96 and 96 parallel to the front direction. Therefore, in cable clamp 20, internal cables 22L and 22R are fixed by a force larger than the fastening force of the pair of bolts 96 and 96. In this manner, since the wedge effect for improving the fixing force of internal cables 22L and 22R is generated by the tapered surface, there is no obstacle even if cable clamp 20 is downsized.

Multiple groove sections 84 formed on left surface 80 of clamp section 70 are parallel to each other in a direction orthogonal to up-down direction D1 on left surface 80 of clamp section 70. Accordingly, multiple groove sections 84 are in pressure contact with side surface 54L of recessed section 48L of fixing section 40 while intersecting internal cables 22L and 22R that are in the state parallel to up-down direction D1 in fixing section 40. This also applies to multiple groove sections 86 formed on right surface 82 of clamp section 70.

In addition, on front surface 76 of clamp section 70 adjacent to and in contact with internal cables 22L and 22R, uneven section 92 formed on front surface 76 is located between internal cables 22L and 22R inserted through fixing section 40, and is uneven as advancing in left-right direction D2, that is, as advancing in a direction from one side to the other side of internal cables 22L and 22R.

In addition, on upper surface 72 of clamp section 70 adjacent to and in contact with internal cables 22L and 22R, a pair of groove recessed sections 88 and 88 formed on upper surface 72 along front-rear direction D3 is located between internal cables 22L and 22R inserted through fixing section 40. As a result, unevenness is formed in a direction as advancing in left-right direction D2 on upper surface 72 of clamp section 70, that is, as advancing in a direction from one side to the other side of internal cables 22L and 22R. This also applies to the pair of groove recessed sections 90 and 90 formed on lower surface 74 of clamp section 70.

As described in detail above, the present embodiment is capable of both improving the fixing force for two internal cables 22 and downsizing of cable clamp 20 by the wedge effect by the tapered surface.

Incidentally, in the present embodiment, two internal cables 22 are an example of multiple cables. Side surfaces 54L and 54R of fixing section 40 are an example of a first tapered surface. Upper surface 72, lower surface 74, front surface 76, rear surface 78, left surface 80, and right surface 82 constituting clamp section 70 are examples of multiple surfaces. Left surface 80 and right surface 82 of clamp section 70 are an example of a second tapered surface. The pair of groove recessed sections 88 and 88 formed on upper surface 72 of clamp section 70 is an example of an uneven section. The pair of groove recessed sections 90 and 90 formed on lower surface 74 of clamp section 70 is an example of an uneven section. The pair of bolts 96 and 96 is an example of a fastening member. A direction orthogonal to up-down direction D1 on left surface 80 of clamp section 70 is an example of a direction intersecting multiple cables. A direction orthogonal to up-down direction D1 on right surface 82 of clamp section 70 is an example of a direction intersecting multiple cables.

In addition, the cable clamp of the present disclosure includes a fixing section through which multiple cables are inserted, a cutout section provided in fixing section in which a portion of the fixing section is cut out to expose multiple cables, and a clamp section that is fastened to the fixing section and presses the multiple cables, which are exposed in the cutout section, between the clamp section and the fixing section, in which the clamp section includes a pressing surface for pressing the multiple tables when fastened to the fixing section.

In the cable clamp of the present disclosure, the pressing surface of the clamp section is a tapered surface inclined with respect to the direction in which the clamp section is fastened to the fixing section.

In the cable clamp of the present disclosure, an uneven section having unevenness in a direction from one side of the cable to the other side of the cable is provided on at least one surface connecting the multiple cables among the multiple surfaces constituting the clamp section.

In these cases, exposed section 55 is an example of the cutout section. Left surface 80 and right surface 82 of clamp section 70 are examples of the pressing surfaces. A direction from the rear side to the front side in front-rear direction D3 is an example of the direction in which the clamp section is fastened to the fixing section. Internal cable 22L is an example of one side of the cable. Internal cable 22R is an example of the other side of the cable.

The present disclosure is not limited to the above-described embodiments, and various modifications may occur without departing from the gist thereof. For example, the number of bolts 96 for fastening clamp section 70 to fixing section 40 may be one or three or more.

### Reference Signs List

14: Plasma head, 20: Cable clamp, 22: Internal cable, 40: Fixing section, 48: Recessed section, 54: Side surface of fixing section, 70: Clamp section, 72: Upper surface of clamp section, 74: Lower surface of clamp section, 76: Front surface of clamp section, 78: Rear surface of clamp section, 80: Left surface of clamp section, 82: Right surface of clamp section, 84: Groove section, 86: Groove section, 88: Groove recessed section, 90: Groove recessed section, 92: Uneven section, 96: Bolt, 100: Cable clamping method, S10: Fitting step, S12: Pressing step, S14: Fastening step

## Claims

1. A cable clamp comprising:
a fixing section through which multiple cables are inserted;
a recessed section where the multiple cables are exposed, the recessed section being provided in the fixing section;
a first tapered surface configured to form the recessed section;
a clamp section configured to be fastened to the fixing section in a state of being fitted into the recessed section; and
a second tapered surface provided on the clamp section and configured to be pressed toward the first tapered surface in a state of being in contact with the multiple cables.

2. The cable clamp according to claim 1, further comprising a groove section provided on the second tapered surface along a direction intersecting the multiple cables.

3. The cable clamp according to claim 1 or 2, wherein the multiple cables are parallel to each other, and the second tapered surface of the clamp section is in a state of being in pressure contact with the multiple cables.

4. A plasma head comprising the cable clamp according to any one of claims 1 to 3 incorporated therein.

5. The plasma head according to claim 4, further comprising an uneven section provided on a surface adjacent to the multiple cables among multiple surfaces constituting the clamp section.

6. The plasma head according to claim 4 or 5, further comprising a fastening member configured to fasten the clamp section to the fixing section at multiple locations.

7. A cable clamping method comprising:
a fitting step of fitting a clamp section into a recessed section where multiple cables are exposed in a fixing section through which the multiple cables are inserted;
a pressing step of pressing a second tapered surface provided in the clamp section toward a first tapered surface forming the recessed section in a state of being in contact with the multiple cables; and
a fastening step of fastening the clamp section to the fixing section.
